# EUROPÄISCHE PATENTSCHRIFT

(11) **EP 1 654 481 B1**
(45) Veröffentlichungstag und Bekanntmachung des Hinweises auf die Patenterteilung: **05.05.2010**
(21) Anmeldenummer: 04763730.1
(22) Anmeldetag: 03.08.2004
(51) Int. Cl.: F16H 15/38

(54) **VARIATOR UND VARIATORANORDNUNG**
VARIATOR AND VARIATOR ARRANGEMENT
VARIATEUR ET SYSTEME DE VARIATEUR

(30) Priorität: 15.08.2003 DE 10338270
(43) Veröffentlichungstag der Anmeldung: 10.05.2006
(73) Patentinhaber: GETRAG Getriebe- und Zahnradfabrik Hermann Hagenmeyer GmbH & Cie KG, 74199 Untergruppenbach (DE)
(72) Erfinder: FLAIG, Armin, 74523 Schwäbisch Hall (DE); RUEHLE, Guenter, 74369 Loechgau (DE)
(74) Vertreter: Steil, Christian
(86) Internationale Anmeldenummer: PCT/EP2004/008669
(87) Internationale Veröffentlichungsnummer: WO 2005/017391

(56) Entgegenhaltungen:
- EP-A- 0 425 914
- EP-A- 1 240 442
- WO-A-90/05860
- WO-A-2004/027293
- DE-C- 714 667
- US-A- 4 499 782

## Beschreibung

Die vorliegende Erfindung betrifft einen Variator für ein Toroidgetriebe, mit einer Antriebsscheibe und einer Abtriebsscheibe, zwischen denen ein Toroidraum eingerichtet ist, der einen Toroidmittenkreis definiert, und wenigstens zwei Rollen, die zur Drehmomentübertragung zwischen der Antriebsscheibe und der Abtriebsscheibe in dem Toroidraum angeordnet sind, wobei die Rollen jeweils an einem Rollenträger drehbar gelagert sind, wobei die Rollenträger jeweils mittels einer Kolben/Zylinderanordnung räumlich verstellbar sind, um die Übersetzung des Variators zu verstellen, wobei die Kolben der Kolben/Zylinderanordnungen jeweils entlang einer Hubachse verstellbar sind, und die Kobeln/Zylinderanordung überjeweilige Hebel mit den Rollenträgern verbundenen sind, Wie aus der nachveröffentlichten WO 2004/090382 bekannt. Ein Variator nach dem Oberbegriff des Anspruchs 1, jedoch ohne dem jeweiligen Hebeln, ist aus der WO 90/05860 bekannt. Ferner betrifft die vorliegende Erfindung eine Variatoranordnung bestehend aus zwei oder mehr Variatoren der genannten Art.

Auf dem Gebiet der Getriebe, insbesondere der Getriebe für Kraftfahrzeuge, besteht ein Trend hin zu stufenlosen Getrieben. Stufenlose Getriebe ermöglichen generell, den bei Kraftfahrzeugen vorgeschalteten Verbrennungsmotor unabhängig von der jeweiligen Geschwindigkeit in einem günstigen Drehzahlbereich zu betreiben. Hierdurch verbessert sich der Wirkungsgrad des durch den Verbrennungsmotor und das stufenlose Getriebe gebildeten Antriebsstranges. Ferner bieten stufenlose Getriebe einen besonders hohen Fahrkomfort.

Innerhalb der stufenlosen Getriebe haben die sog. Toroidgetriebe eine besondere Bedeutung, und zwar insbesondere auf Grund ihrer höheren Drehmomentkapazität im Vergleich zu stufenlosen Umschlingungsgetrieben (CVTs).

Innerhalb der Toroidgetriebe findet das System von Torotrak™ besondere Beachtung (vgl. www.torotrak.com). Dieses Getriebe kommt ohne eingangsseitige Anfahrkupplung oder hydrodynamischen Drehmomentwandler aus. Es handelt sich um ein Volltoroidgetriebe, das generell nach der Art eines Vorgelegegetriebes aufgebaut ist. Der Variator sorgt für eine stufenlose Verstellung der Übersetzung. Ein Planetenradsatz dient als Summiergetriebe. Kern des Toroidgetriebes ist der Variator der eingangs genannten Art bzw. eine Anordnung aus mehreren derartigen Variatoren.

In den derzeit propagierten Getriebeentwürfen sind die Kolben/Zylinderanordnungen zum räumlichen Verstellen der Rollenträger tangential zum Toroidmittenkreis und räumlich weit außerhalb des maximalen Durchmessers der Toroidscheiben (Antriebs- bzw. Abtriebsscheibe) angeordnet. Durch diese Anordnung ragen die Zylinder weit über die eigentliche Kontur des Variators hinaus, wodurch das Toroidgetriebe insgesamt in radialer Richtung groß baut (ungünstiges Package). Hierdurch lassen sich die derzeit bekannten Entwürfe von Toroidgetrieben nur schwer in die Tunnelkontur von Fahrzeugen mit Standardantrieben einpassen.

Aus der DE 103 01 160 (die einen Stand der Technik gemäß § 3 (2) des Deutschen Patentgesetzes bildet), ist ein Toroidgetriebe mit mechanisch gekoppelten Rollen bekannt. Hierbei wird eine einzige Kolben/Zylinderanordnung dazu verwendet, über mechanische Koppelmittel sämtliche Rollen des Variators gleichsinnig zu verstellen. Die einzelne Kolben/Zylinderanordnung muss naturgemäß eine vergleichsweise große Querschnittsfläche besitzen, um die notwendige Kraft zur Verstellung aller Rollen des Variators bereitzustellen. Ferner ist auch diese Kolben/Zylinderanordnung radial weit außerhalb der Toroidscheiben angeordnet. Daher ist auch dieser Variator hinsichtlich des Package ungünstig. In der Schrift wird zum Stand der Technik ferner vorgeschlagen, dass es platzsparender ist, wenn die Aktuatoren der Rollenträger so angeordnet werden, dass bei einer Verstellung zwei der drei Aktuatoren mit Druck beaufschlagt werden und der andere mit Zug oder umgekehrt. Hierzu wird ausgeführt, dass die Aktuatoren dann entsprechend kraftgekoppelt sein müssen, was z.B. durch eine hydraulische Steuerung möglich ist.

Vor dem obigen Hintergrund ist es die Aufgabe der vorliegenden Erfindung, einen verbesserten Variator für ein Toroidgetriebe bzw. eine hierauf basierende Variatoranordnung anzugeben.

Die obige Aufgabe wird bei dem eingangs genannten Variator dadurch gelöst, dass die Kolben/Zylinderanordnungen und die Rollenträger so an den jeweiligen Hebeln angelenkt sind, dass die von den Kolben/Zylinderanordnungen erzeugte Stellkraft verstärkt auf die jeweiligen Rollenträger übertragen wird.

Dadurch wird das Hebelgesetz der Mechanik dazu ausgenutzt, dass die Rollenträger mit vergleichsweise geringen Stellkräften bewegbar sind. Hierdurch können die Kolben/Zylinderanordnungen mit einem nochmals verringerten Querschnitt ausgeführt werden. Der für den Variator notwendige Bauraum wird hierdurch weiter verringert.

Diese Vorteile gelten auch für eine Variatoranordnung mit mehreren solchen Variatoren und für ein hiermit aufgebautes Toroidgetriebe.

Die obige Aufgabe wird demzufolge vollkommen gelöst.

Es versteht sich, dass die Hebelsysteme der jeweiligen Rollen vorzugsweise kinematisch identisch ausgeführt sind, so dass die Hub-Übersetzungsverhältnisse gleich sind, so dass die Aufteilung der Rollen-Abstützkräfte gleichmäßig über den Umfang des Variators verteilt wird.

Von besonderem Vorzug ist es, wenn die Hebel in dem Toroidgetriebe gehäusefest verschwenkbar gelagert sind.

Hierdurch wird ein fester Bezug für die Hebel eingerichtet, so dass die Hebelsysteme einfacher steuerbar sind.

Ferner ist es vorteilhaft, wenn die Hubachsen der Kolben/Zylinderanordnungen jeweils etwa parallel zu einer Tangente des Toroidmittenkreises ausgerichtet sind.

Hierdurch ist eine kurze axiale Bauweise möglich.

Dabei ist es von besonderem Vorteil, wenn die Kolben/Zylinderanordnungen im Bereich des Außenumfangs der Antriebs- bzw. Abtriebsscheibe angeordnet sind.

Hierdurch wird erreicht, dass der Variator auch in radialer Richtung kompakt baut.

Von besonderem Vorzug ist es dabei natürlich, wenn die Kolben/Zylinderanordnungen zwischen Antriebs- und Abtriebsscheibe angeordnet sind, also zumindest teilweise innerhalb des Toroidraumes liegen.

Bei dieser Ausführungsform ist es ferner von Vorteil, wenn die Hubachsen der Kolben/Zylinderanordnungen etwa senkrecht zu der Achse der Antriebs- bzw. Abtriebsscheibe angeordnet sind.

Hierdurch wird wiederum eine besonders kurze axiale und radiale Bauweise erzielt. Dabei liegen die Kolben/Zylinderanordnungen bevorzugt auf einer Kreislinie, die konzentrisch zu dem Toroidmittenkreis angeordnet ist. Besonders bevorzugt liegt der durch die Kolben/Zylinderanordnungen gebildete Kreis in der gleichen Ebene wie der Toroidmittenkreis.

Alternativ hierzu ist es jedoch auch möglich, die Hubachsen der Kolben/Zylinderanordnungen etwa parallel zu der Achse der Antriebs- bzw. Abtriebsscheibe anzuordnen.

Diese Bauform führt in der Regel zu einem etwas komplizierteren Hebelsystem, kann jedoch ebenfalls zu einer deutlichen Reduzierung der Baugröße in radialer Richtung beitragen.

Insgesamt ist es besonders bevorzugt, wenn die Zylinder der Kolben/Zylinderanordnungen an einem gemeinsamen Systemträger gelagert sind.

Hierdurch wird der bauliche Aufwand verringert.

Dies gilt gleichermaßen, wenn die Kolben an einem gemeinsamen Systemträger gelagert sind.

Dabei ist es von besonderem Vorteil, wenn die Zylinder bzw. Kolben einstückig mit dem Systemträger ausgebildet sind.

Hierdurch wird die Teileanzahl weiter reduziert. Ferner ergibt sich eine kompakte Bauweise.

Gemäß einem weiteren insgesamt bevorzugten Ausführungsbeispiel sind die Hebel an einem gemeinsamen Systemträger schwenkbar gelagert.

Der Systemträger ist dabei vorzugsweise gehäusefest innerhalb des Toroidgetriebes gelagert. Der Systemträger kann derselbe sein, an dem auch die Zylinder der Kolben/Zylinderanordnungen festgelegt sind.

Hierdurch wird wiederum der bauliche Aufwand verringert.

Vorteilhaft ist es ferner, wenn die Rollenträger jeweils über ein Kardan- oder Kugelgelenk mit dem zugehörigen Hebel verbunden sind.

Hierdurch wird erreicht, dass die Rollenträger räumlich in mehreren Freiheitsgraden beweglich sind (insbesondere in einer axialen Richtung und drehbar um diese Achse). Hierdurch lassen sich folglich die notwendigen kinematischen Freiheitsgrade des Rollenträgers trotz der Hebelsysteme konstruktiv einfach realisieren.

Gemäß einer weiteren bevorzugten Ausführungsform ist ein Systemträger als gehäusefester Bestandteil des Variators vorgesehen.

Der Systemträger kann, wie bereits oben erwähnt, als Träger für die Zylinder und/oder die Hebel dienen. Er kann jedoch auch weitere Aufgaben erfüllen.

Von besonderem Vorteil ist es dabei, wenn der Systemträger mehrteilig ist.

Hierdurch wird erreicht, dass der Systemträger eine höhere Funktionalität besitzen kann.

Von besonderem Vorzug ist es, wenn der Systemträger wenigstens einen Fluidkanal aufweist.

Hierdurch ist es möglich, den Systemträger zum Transportieren von Fluid, insbesondere Öl, zu nutzen.

Dabei ist es von besonderem Vorteil, wenn der Fluidkanal bei einem mehrteiligen Systemträger durch wenigstens eine Nut in einem Systemträgerteil ausgebildet ist, die durch ein anderes Systemträgerteil geschlossen ist.

Hierdurch wird der Aufwand zum Herstellen der Fluidkanäle deutlich verringert.

Gemäß einer weiteren bevorzugten Ausführungsform weist der Systemträger eine Lagerstelle für eine Variatorwelle auf.

Hierdurch ist es möglich, den Systemträger für eine weitere Funktion zu nutzen. So kann bei einer Variatoranordnung mit zwei nebeneinander angeordneten Variatoren erreicht werden, dass Reaktionskräfte aus dem Antrieb bzw. Abtrieb der inneren Variatorscheibe nicht in den Variator eingeleitet werden. Die Variatorwelle bleibt dann querkraftfrei. Eine Durchbiegung dieser Welle wird vermieden.

Aus vergleichbaren Gründen kann es vorteilhaft sein, wenn der Systemträger eine Lagerstelle für eine Vorgelegewelle aufweist.

Gemäß einer weiteren bevorzugten Ausführungsform wird die Kinematik der Verbindung der Kolben/Zylinderanordnungen mit den jeweiligen Hebeln dazu genutzt, die transversale Bewegung der Rollen zur Erreichung der Übersetzung zu reduzieren.

Hierdurch kann der "Hub" verkleinert werden, und zwar durch Überlagerung einer Schwenk- bzw. Kippbewegung.

Alternativ hierzu ist es möglich, die Kinematik der Verbindung der Kolben/Zylinderanordnungen mit den jeweiligen Hebeln dazu zu nutzen, die transversale Bewegung der Rollen zur Erreichung der Übersetzung zu vergrößern.

Hierdurch ergibt sich eine bessere Regelbarkeit.

Bei der erfindungsgemäßen Variatoranordnung ist es von besonderem Vorteil, wenn die zwei Variatoren jeweils einen Systemträger aufweisen, die durch ein Verbindungselement miteinander verbunden sind.

Hierdurch kann die Variatoranordnung insgesamt als ein Modul aufgebaut werden, was die Montage ins Getriebe vereinfacht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Toroidgetriebes;
- Fig. 2: eine teilweise weggeschnittene perspektivische schematische Ansicht eines erfindungsgemäßen Variators;
- Fig. 3: eine seitliche Ansicht einer weiteren Ausführungsform des erfindungsgemäßen Variators; und
- Fig. 4: eine Längsschnittansicht durch eine erfindungsgemäße Variatoranordnung mit zwei Variatoren.

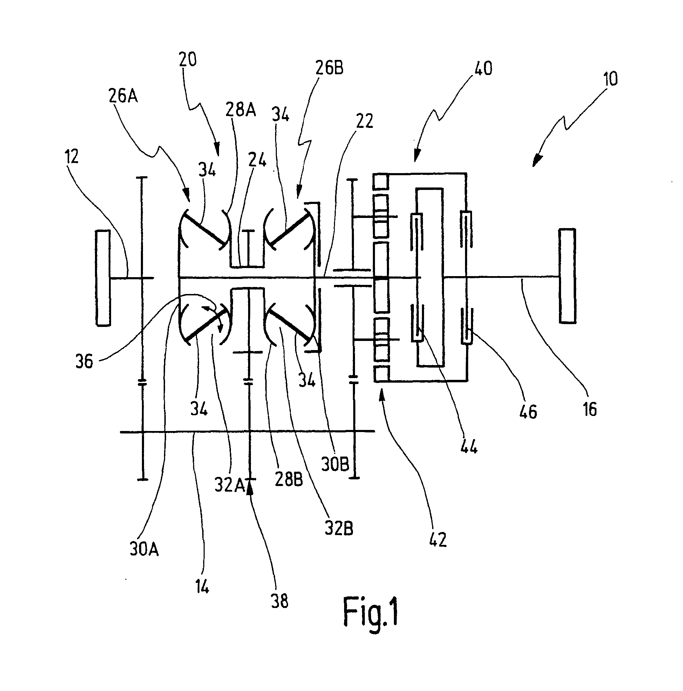

In Fig. 1 ist ein schematisch dargestelltes Toroidgetriebe generell mit 10 bezeichnet.

Das Toroidgetriebe weist eine Getriebeeingangswelle 12, eine Vorgelegewelle 14 und eine Getriebeausgangswelle 16 auf.

Eine Variatoranordnung des Toroidgetriebes 10 ist bei 20 gezeigt. Die Variatoranordnung 20 weist eine Variatorhauptwelle 22 und eine Variatornebenwelle 24 auf. Ferner beinhaltet die Variatoranordnung 20 zwei Variatoren 26A, 26B.

Jeder Variator weist eine Antriebsscheibe 28A, 28B und eine Abtriebsscheibe 30A, 30B auf.

Die Antriebsscheiben 28A, 28B schließen mit den jeweiligen Abtriebsscheiben 30A, 30B jeweils einen Toroidraum 32A, 32B ein.

In den Toroidräumen 32A, 32B sind jeweils, über den Toroidraum umfänglich verteilt, eine Mehrzahl von Rollen 34 angeordnet, in der Regel jeweils drei Rollen 34.

Die Rollen 34 lassen sich mittels einer nicht näher dargestellten Aktuatorik räumlich innerhalb des Toroidraumes 32 verstellen, wie es schematisch bei 36 gezeigt ist, um die Übersetzung der Variatoranordnung 20 zu verändern. Dabei versteht sich, dass alle Rollen 34 der Variatoren 26A, 26B gleichsinnig verstellt werden, um die auftretenden Reaktionskräfte gleichmäßig über den Umfang der Variatoranordnung 20 aufnehmen zu können.

Bei 38 ist ein Radsatz gezeigt, der die Vorgelegewelle 14 nach der Art einer Konstanten mit der Variatornebenwelle 24 verbindet, an der die Antriebsscheiben 28A, 28B festgelegt sind. Die Abtriebsscheiben 30A, 30B sind an der Variatorhauptwelle 22 festgelegt, die mit einem Summiergetriebe 40 verbunden ist.

Das Summiergetriebe 40 weist einen Planetenradsatz 42 auf. Die Variatorhauptwelle 22 ist mit dem Sonnenrad des Planetenradsatzes 42 verbunden. Die Vorgelegewelle ist über einen weiteren (nicht bezeichneten) Radsatz mit den Planetenträgern des Planetenradsatzes 42 verbunden.

Das Sonnenrad ist über eine High-Regime-Kupplung 44 mit der Getriebeausgangswelle 16 verbindbar. Das Hohlrad des Planetenradsatzes 42 ist über eine Low-Regime-Kupplung 46 mit der Getriebeausgangswelle 16 verbindbar.

Die Funktionsweise des Toroidgetriebes 10 ist allgemein bekannt und wird aus Gründen einer kompakten Darstellung hier nicht im Detail beschrieben.

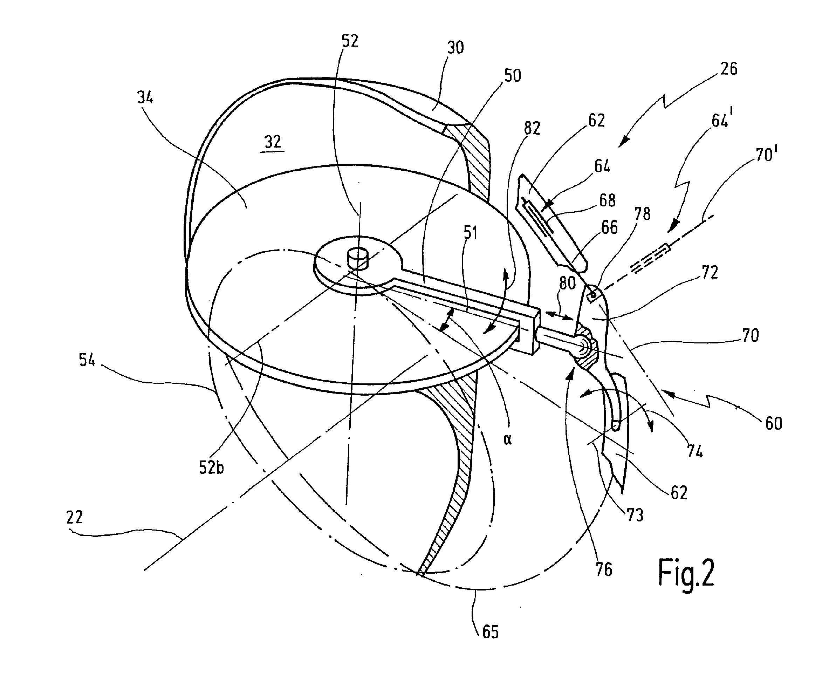

Fig. 2 zeigt eine schematische perspektivische, teilweise weggeschnittene Ansicht eines Teils eines erfindungsgemäßen Variators 26.

Der Variator 26 kann als die Variatoren 26A, 26B der Variatoranordnung 20 in dem Toroidgetriebe 10 der Fig. 1 eingesetzt werden.

Der Variator 26 weist eine (nicht dargestellte) Antriebsscheibe 28 und eine Abtriebsscheibe 30 auf, die einen Toroidraum 32 einschließen. Ferner sind in dem Toroidraum 32 drei Rollen 34 umfänglich verteilt angeordnet, von denen in Fig. 2 eine Rolle 34 dargestellt ist.

Die Rolle 34 ist an einem gabelartigen Rollenträger 50 drehbar gelagert. Die Längsachse des Rollenträgers 50 ist mit 51 bezeichnet. Die Drehachse der Rolle 34 an dem Rollenträger 50 ist mit 52 bezeichnet.

Eine Toroidmittenebene 54 des Toroidraumes 32 ist senkrecht zu der Variatorhauptwelle 22 ausgerichtet, die in Fig. 2 schematisch als Achse dargestellt ist.

Der Variator 26 weist ferner eine allgemein mit 60 bezeichnete Verstelleinrichtung für den Rollenträger 50 auf. Die Verstelleinrichtung 60 ist an einem gehäusefesten Systemträger 62 angeordnet, der parallel zu der Toroidmittenebene 54 angeordnet ist. In Fig. 2 ist aus Gründen einer übersichtlicheren Darstellung lediglich ein Teil des Systemträgers 62 dargestellt.

An dem Systemträger 62 ist eine Kolben/Zylinderanordnung 64 angeordnet. Die Kolben/Zylinderanordnung 64 liegt in radialer Richtung etwa im Bereich des Umfangs 65 der Abtriebsscheibe 30.

Die Kolben/Zylinderanordnung 64 weist einen an dem Systemträger 62 festgelegten Zylinder 68 und einen Kolben 66 auf, der entlang einer Hubachse 70 verschieblich ist. Die Hubachse 70 ist in der Darstellung der Fig. 2 etwa tangential zu dem Umfang 65 der Abtriebsscheibe 30 ausgerichtet und verläuft etwa senkrecht zu der Achse 22.

Der Kolben 66 ist mit einem Hebel 72 verbunden. Der Hebel 72 ist um eine Hebelachse 73 verschwenkbar an dem Systemträger 62 gelagert. Die Hebelachse 73 ist generell etwa parallel zu der Achse 22 ausgerichtet. Die Verschwenkbarkeit des Hebels 72 ist bei 74 schematisch angedeutet.

Etwa in einem mittleren Bereich des Hebels 72 ist an diesem ein Kugelgelenk 76 angeordnet, an dem ein Ende des Rollenträgers 50 gelenkig gelagert ist.

Der Kolben 66 ist etwa im Bereich des freien Endes des Hebels 72 angelenkt, und zwar mittels einer schematisch angedeuteten Führung 78.

Die Verstelleinrichtung 60 bzw. der hierdurch gebildete Hebelmechanismus ist so ausgebildet, dass zwischen der Toroidmittenebene 54 und der Längsachse 51 (Rollenschwenkachse) des Rollenträgers 50 ein Castorwinkel α eingerichtet ist.

Durch eine Betätigung der Kolben/Zylinderanordnung kann der Hebel 72 um die Hebelachse 73 ausgelenkt werden. Hierbei ergibt sich eine räumliche Verstellung des Rollenträgers 50, die sich zusammensetzt aus Linearbewegungen, wie sie schematisch bei 80 dargestellt sind, und Drehbewegungen um eine Achse 52b des Rollenträgers 50 herum, wie es schematisch bei 82 gezeigt ist. Die Achse 52b verläuft etwa parallel zu der Achse 22.

Durch geeignete Wahl des Ortes des Kugelgelenkes 76 (oder eines entsprechenden Kardangelenkes) und des Ortes der Anlenkung des Kolbens 66 an dem Hebel 72 lassen sich die Hebelverhältnisse bei dem Verstellvorgang so einrichten, dass eine Kraftverstärkung erzielt werden kann. Hierdurch ist es möglich, dass die Zylinderfläche der Kolben/Zylinderanordnung 64 klein ist, so dass die Kolben/Zylinderanordnung sich baulich leicht in den Variator 26 integrieren lässt.

Es versteht sich, dass entsprechende Verstelleinrichtungen 60 für die anderen zwei Rollen (nicht dargestellt) des Variators 26 in ähnlicher Weise umfänglich verteilt an dem Systemträger 62 angeordnet sind.

Die drei Kolben/Zylinderanordnungen 64 des Variators 26 werden mittels einer nicht näher dargestellten Steuereinrichtung parallel zueinander und gleichsinnig angesteuert. Ferner sind die Hebelverhältnisse bei allen drei Verstelleinrichtungen 60 identisch ausgebildet. Die Hub-Übersetzungsverhältnisse sind ebenfalls identisch gewählt.

Durch die tangentiale Anordnung der Kolben/Zylinderanordnungen 64 um den Außenumfang der Scheiben 28, 30 des Variators 26 herum schließen die Kolben/Zylinderanordnungen 64 etwa einen Kreis ein, der konzentrisch zu dem Außenumfang 65 angeordnet ist. Im Idealfall können die Kolben/Zylinderanordnungen 64 unmittelbar zwischen den Scheiben 28, 30 des Variators 26 angeordnet werden. Aus baulichen Gründen ist es ggf. jedoch notwendig, dass die Kolben/Zylinderanordnungen 64 sich leicht über den Umfang 65 hinaus erstrecken. In diesem Fall verlaufen die Hubachsen 70 jeweils parallel zu einer Tangente des Außenumfanges 65.

Obgleich es natürlich bevorzugt ist, wenn die Kolben/Zylinderanordnungen 64 an einem gemeinsamen Systemträger 62 angeordnet sind, können sie auch jeweils einzeln über geeignete Mittel gehäusefest angeordnet werden.

Bei einer alternativen Ausführungsform sind die Kolben/Zylinderanordnungen zwar im Bereich des Umfangs 65 der Scheiben 28, 30 des Variators 26 angeordnet, jedoch um 90° verdreht, wie es schematisch bei 64' angedeutet ist. Die entsprechende Hubachse 70' dieser abgewandelten Kolben/Zylinderanordnung 64' verläuft dann etwa parallel zu der Achse 22. In diesem Fall kann es notwendig sein, einen mehrgliedrigen Hebelmechanismus zur Verstellung des Rollenträgers 50 vorzusehen.

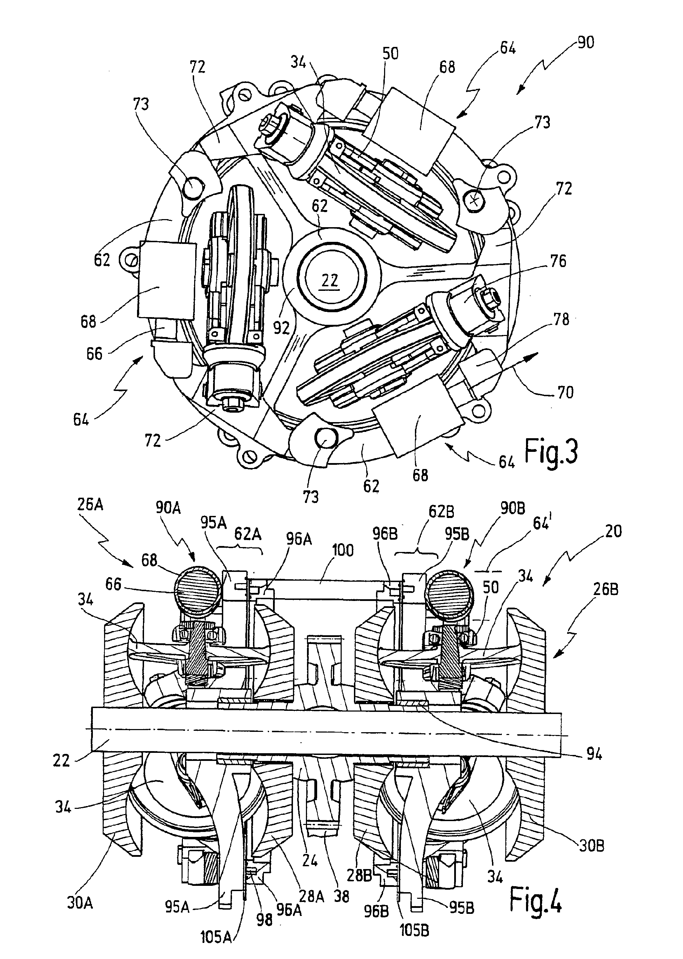

In Fig. 3 ist eine implementierbare Ausführungsform eines Variatormoduls 90 für einen Variator 26 dargestellt. Das Variatormodul 90 ist gemäß den Prinzipien aufgebaut, die in Bezug auf den Variator 26 der Fig. 2 bzw. dessen Verstelleinrichtung 60 erläutert worden sind. Im Folgenden wird lediglich auf Unterschiede hierzu eingegangen.

Das Variatormodul 90 weist einen Systemträger 62 auf. Der Systemträger 62 weist eine Ringscheibe auf, an der die Hebel 72 angelenkt und die Zylinder 68 der Kolben/Zylinderanordnungen 64 festgelegt sind. Die Zylinder 68 können auf beliebige Art und Weise an dem Systemträger 62 festgelegt sein. Sie können auch einstückig hiermit ausgebildet sein.

Die Ringscheibe des Systemträgers 62 ist über drei Radialstege mit einer Nabe 92 des Systemträgers 62 verbunden, die um die Variatorhauptwelle 22 herum angeordnet ist. Die Variatorhauptwelle 22 ist in Bezug auf den gehäusefesten Systemträger 62 drehbar innerhalb der Nabe 92 gelagert.

Das Variatormodul 90 beinhaltet ferner die drei Rollenträger 50 mit den jeweils daran gelagerten Rollen 34.

Das Variatormodul 90 kann vor dem Einbau in den Variator 26 vormontiert werden. Bei Bereitstellung geeigneter Hydraulikfluidanschlüsse ist es sogar möglich, das Variatormodul 90 vor dem Einbau in den Variator 26 auf Funktionsfähigkeit hin zu testen und zu entlüften. Ferner ist der Zusammenbau des Variators 26 vereinfacht.

Fig. 4 zeigt eine Variatoranordnung 20 (vgl. Fig. 1) mit zwei an einer Variatorhauptwelle 22 nebeneinander angeordneten Variatoren 26A, 26B.

Die Variatoren 26A, 26B sind nach den gleichen Grundprinzipien aufgebaut wie der Variator 26 der Fig. 2. Ferner beinhalten die Variatoren 26A, 26B jeweils ein Variatormodul 90A bzw. 90B gemäß Fig. 3.

Bei 94 ist dargestellt, dass die Variatornebenwelle 24 an den Systemträgern 62A, 62B gelagert ist, und mittelbar darüber auch die Variatorhauptwelle 22.

Die Systemträger 62A, 62B sind in der dargestellten Ausführungsform zweiteilig aufgebaut und bestehen aus einem ersten Träger 95 und einem weiteren Träger 96. Der erste Träger 95 besitzt dieselbe Funktion wie der in Bezug auf Fig. 3 beschriebene Systemträger 62. Das heißt, der erste Träger 95 lagert die Hebel 72 und die Kolben/Zylinderanordnungen 64.

Der weitere Träger 96 ist benachbart zu dem ersten Träger 95 angeordnet. Die Träger 95, 96 liegen eng aneinander an. An dem weiteren Träger 96 (und/oder an dem ersten Träger 95) sind ein oder mehrere Nuten ausgebildet, die in Verbindung mit dem jeweils anderen Träger 95 bzw. 96 als Hydraulikfluidkanäle (Ölkanäle) 98 dienen. Demzufolge können die Systemträger 62A, 62B auch zur Führung von Hydraulikfluid in das Innere des Toroidraumes 32 hinein verwendet werden.

Schließlich ist gezeigt, dass die Systemträger 62A, 62B über ein Verbindungselement 100 starr miteinander verbunden sind.

Bei dieser Ausführungsform ist es möglich, die Variatoranordnung 20 als ein vorgefertigtes Modul herzustellen, das anschließend in das Toroidgetriebe 10 eingebaut wird.

Generell gilt in Bezug auf den erfindungsgemäßen Variator und die erfindungsgemäße Variatoranordnung ergänzend Folgendes:
Die Verstelleinrichtungen 60 sind identisch, insbesondere hinsichtlich der Kolbenweg-Übersetzungsfunktion. Dadurch sind Übersetzungsabweichungen bei Verstellvorgängen minimal und damit die Wirkungsgrade gegenüber dem Stand der Technik verbessert.

Durch geeignete Anordnung der Hebel 72 kann die durch deren Schwenkbewegung erzeugte Kippung der Rollenachse 52 so ausgeführt werden, dass die Übersetzungsverstellung verstärkt wird. Dadurch kann die erforderliche Schwenkbewegung der Hebel 72 zur Abdeckung des gesamten Übersetzungsbereichs reduziert werden. Dies verringert den Bauraumbedarf der Verstelleinrichtung 60.

Gleichfalls kann die durch die Schwenkbewegung der Hebel 72 erzeugte Kippung der Rollenachse 52 so ausgeführt werden, dass sie der Übersetzungsverstellung entgegenwirkt. Dadurch wird die Übersetzungsverstellung mittels der Verstelleinrichtung 60 träger und damit kann die Regelung weniger dynamisch ausgeführt werden. Hieraus ergeben sich Vorteile in Bezug auf die Regelung/Steuerung des Getriebes.

In Bezug auf die oben erwähnten Hydraulikfluidkanäle 98 ist zu erwähnen, dass die Abdichtung der Kanäle auch durch eine Zwischenplatte 105 zwischen den Systemträgerteilen 95, 96 erfolgen kann.

Die Systemträger 62 können jeweils Lagerstellen für eine Variatorhauptwelle 22 aufweisen. Dadurch werden Reaktionskräfte aus dem Antrieb bzw. Abtrieb der inneren Variatorscheiben 28A bzw. 28B nicht in den Variator 26 eingeleitet. Die Variatorhauptwelle 22 ist dann querkraftfrei. Ferner wird eine Durchbiegung der Variatorhauptwelle 22 vermieden.

Ferner können die Systemträger 62 Lagerstellen für die Vorgelegewelle 14 aufweisen (nicht dargestellt). Hierdurch kann die Biegung der Vorgelegewelle 14 reduziert werden. Die Lagerreaktionen des Antriebs- bzw. Abtriebs des jeweiligen Variators werden dann von dem Systemträger 62 aufgenommen und belasten das Gehäuse des Toroidgetriebes 10 weniger.

Die Position der Rollen 34 innerhalb des Toroidraumes ("cavity") 32 des erfindungsgemäßen Volltoroid-Variators 26 bestimmt über geometrische Beziehungen die Übersetzung des Variators 26. Wird die Position der Rollen 34 in dem Toroidraum 32 verändert, dann ändert sich über die Kinematik und die Geometrie auch die Übersetzung. Beim Stand der Technik mit radial ausgerichteten Kolben/Zylinderanordnungen werden die Rollen 34 und die Rollenträger 50 mittels dieser Kolben/Zylinderanordnungen tangential zum Toroidmittenkreis 54 verschoben. Hierdurch wird die Übersetzungsänderung eingeleitet. Der Hydraulikdruck und damit die Kraft der Kolben/Zylinderanordnungen bestimmt dann das im Variator 26 übertragbare Moment.

Bei der erfindungsgemäßen Ausführungsform sind die Rollenträger 50 nicht mehr direkt mit den Kolben/Zylinderanordnungen verbunden, sondern über die jeweiligen Hebel 72. Wird den Kolben 66 der Kolben/Zylinderanordnungen 64 eine Bewegung aufgeprägt, so wird diese Bewegung über die Hebel 72 auf die Rollenträger 50 übertragen und es resultiert ebenfalls eine Übersetzungsänderung. Die Kinematik der Rollenträger 50 ist dabei so ausgeführt, dass sie der Bewegung der Rollenträger des Standes der Technik nachempfunden wird. Dabei wird eine resultierende Kippbewegung um die Achse 52b der Rollen 34 dazu ausgenutzt, dass die transversale Bewegung der Rollen 34 zur Erreichung einer bestimmten Übersetzung gegenüber der bekannten Lösung reduziert wird.

Die Führungen 78 der Kolben 66 an den Hebeln 72 können beispielsweise mittels einer Kulisse erfolgen, wobei die erforderliche Nut am Kolben und das Gleitelement am Hebel angeordnet sind, oder umgekehrt.

Alternativ kann die Anbindung auch mittels eines Gelenks zwischen Kolben und Hebel erfolgen. Dabei ist der Zylinder dann gelenkig am Gehäuse bzw. am Systemträger angebunden. Das Gelenk kann als Kugelgelenk im Kolben ausgeführt sein.

## Patentansprüche

1. Variator (26) für ein Toroidgetriebe (10), mit einer Antriebsscheibe (28) und einer Abtriebsscheibe (30), zwischen denen ein Toroidraum (32) eingerichtet ist, der einen Toroidmittenkreis (54) definiert, und wenigstens zwei Rollen (34), die zur Drehmomentübertragung zwischen der Antriebsscheibe (28) und der Abtriebscheibe (30) in dem Toroidraum (32) angeordnet sind, wobei die Rollen (34) jeweils an einem Rollenträger (50) drehbar gelagert sind, wobei die Rollenträger (50) jeweils mittels einer Kolben/Zylinderanordnung (64) räumlich verstellbar sind, um die Übersetzung des Variators (26) zu verstellen, und wobei die Kolben (66) der Kolben/Zylinderanordnungen (64) jeweils entlang einer Hubachse (70) verstellbar sind, und wobei die Kolben/Zylinderanordnungen (64) über jeweilige Hebel (72) mit den Rollenträgern (50) verbunden sind,
**dadurch gekennzeichnet, dass**
die Kolben/Zylinderanordnungen (64) und die Rollenträger (50) so an den jeweiligen Hebeln (72) angelenkt sind, dass die von den Kolben/Zylinderanordnungen (64) erzeugte Stellkraft verstärkt auf die jeweiligen Rollenträger (50) übertragen wird.

2. Variator nach Anspruch 1, **dadurch gekennzeichnet, dass** die Hebel (72) in dem Toroidgetriebe (10) gehäusefest verschwenkbar gelagert sind.

3. Variator nach Anspruch 1 oder 2, **dadurch gekennzeichnet, dass** die Hubachsen (70) der Kolben/Zylinderanordnungen (64) jeweils etwa parallel zu einer Tangente des Toroidmittenkreises (54) ausgerichtet sind.

4. Variator nach Anspruch 3, **dadurch gekennzeichnet, dass** die Kolben/Zylinderanordnungen (64) im Bereich des Außenumfangs der Antriebs- bzw. Abtriebscheibe (28, 30) angeordnet sind.

5. Variator nach Anspruch 4, **dadurch gekennzeichnet, dass** die Hubachsen (70) der Kolben/Zylinderanordnungen (64) etwa senkrecht zu der Achse (22) der Antriebs- bzw. Abtriebsscheibe (28, 30) angeordnet sind.

6. Variator nach Anspruch 4, **dadurch gekennzeichnet, dass** die Hubachsen (70') der Kolben/Zylinderanordnungen (64') etwa parallel zu der Achse (22) der Antriebs- bzw. Abtriebsscheibe (28, 30) angeordnet sind.

7. Variator nach einem der Ansprüche 1 - 6, **dadurch gekennzeichnet, dass** die Zylinder (68) der Kolben/Zylinderanordnungen (64) an einem gemeinsamen Systemträger (62) gelagert sind.

8. Variator nach einem der Ansprüche 1 - 6, **dadurch gekennzeichnet, dass** die Kolben der Kolben/Zylinderanordnungen an einem gemeinsamen Systemträger gelagert sind.

9. Variator nach Anspruch 7 oder 8, **dadurch gekennzeichnet, dass** die Zylinder (68) bzw. Kolben einstückig mit dem Systemträger (62) ausgebildet sind.

10. Variator nach einem der Ansprüche 1 - 9, **dadurch gekennzeichnet, dass** die Hebel (72) an einem gemeinsamen Systemträger (62) schwenkbar gelagert sind.

11. Variator nach einem der Ansprüche 1 - 10, **dadurch gekennzeichnet, dass** die Rollenträger (50) jeweils über ein Kardan- oder ein Kugelgelenk (76) mit dem zugehörigen Hebel (72) verbunden sind.

12. Variator nach einem der Ansprüche 1-11, **dadurch gekennzeichnet, dass** ein Systemträger (62) als gehäusefester Bestandteil des Variators (26) vorgesehen ist.

13. Variator nach Anspruch 12, **dadurch gekennzeichnet, dass** der Systemträger (62, 95, 96) mehrteilig ist.

14. Variator nach Anspruch 12 oder 13, **dadurch gekennzeichnet, dass** der Systemträger (62) wenigstens einen Fluidkanal (98) aufweist.

15. Variator nach Anspruch 13 und 14, **dadurch gekennzeichnet, dass** der Fluidkanal (98) durch wenigstens eine Nut in einem Systemträgerteil (96) ausgebildet ist, die durch ein anderes Systemträgerteil (95) geschlossen ist.

16. Variator nach einem der Ansprüche 12 - 15, **dadurch gekennzeichnet, dass** der Systemträger (62) eine Lagerstelle (94) für eine Variatorwelle (22) aufweist.

17. Variator nach einem der Ansprüche 12 - 15, **dadurch gekennzeichnet, dass** der Systemträger eine Lagerstelle für eine Vorgelegewelle aufweist.

18. Variator nach einem der Ansprüche 1 - 17, **dadurch gekennzeichnet, dass** die Kinematik der Verbindung der Kolben/Zylinderanordnungen (64) mit den jeweiligen Hebeln (72) dazu genutzt wird, die Rollen (34) transversal zu bewegen, um die Übersetzung zu reduzieren.

19. Variator nach einem der Ansprüche 1 - 17, **dadurch gekennzeichnet, dass** die Kinematik der Verbindung der Kolben/Zylinderanordnungen (64) mit den jeweiligen Hebeln (72) dazu genutzt wird, die Rollen (34) transversal zu bewegen, um die Übersetzung zu vergrößern.

20. Variatoranordnung (20) bestehend aus zwei oder mehr Variatoren (26) gemäß einem der Ansprüche 1 - 19.

21. Variatoranordnung nach Anspruch 20, **dadurch gekennzeichnet, dass** die zwei Variatoren (26) jeweils einen Systemträger (62) aufweisen, die durch ein Verbindungselement (100) miteinander verbunden sind.

## Claims

1. A variator (26) for a toroidal transmission (10), having a driving disk (28) and a driven disk (30), between which is set up a toroidal space (32) which defines a toroidal reference circle (54), and at least two rollers (34) which are arranged in the toroidal space (32) for torque transfer between the driving disk (28) and the driven disk (30), wherein the rollers (34) are in each case mounted rotatably on a roller carrier (50), wherein the roller carriers (50) are in each case spatially adjustable by means of a piston/cylinder arrangement (64), in order to adjust the transfer ratio of the variator (26), and wherein the pistons (66) of the piston/cylinder arrangements (64) are in each case adjustable along a stroke axis (70), and wherein the piston/cylinder arrangements (64) are connected to the roller carriers (50) via respective levers (72),
**characterized in that**
the piston/cylinder arrangements (64) and the roller carriers (50) are articulated on the respective levers (72), such that the actuating force generated by the piston/cylinder arrangements (64) is transmitted, reinforced, to the respective roller carriers (50).

2. The variator as claimed in claim 1, **characterized in that** the levers (72) are pivotably mounted in the toroidal transmission (10) fixedly with respect to the housing.

3. The variator as claimed in claim 1 or 2, **characterized in that** the stroke axes (70) of the piston/cylinder arrangements (64) are oriented in each case approximately parallel to a tangent of the toroidal reference circle (54).

4. The variator as claimed in claim 3, **characterized in that** the piston/cylinder arrangements (64) are arranged in the region of the outer circumference of the driving or driven disk (28, 30).

5. The variator as claimed in claim 4, **characterized in that** the stroke axes (70) of the piston/cylinder arrangements (64) are arranged approximately perpendicular with respect to the axis (22) of the driving or driven disk (28, 30).

6. The variator as claimed in claim 4, **characterized in that** the stroke axes (70') of the piston/cylinder arrangements (64') are arranged approximately parallel to the axis (22) of the driving or driven disk (28, 30).

7. The variator as claimed in one of the claims 1 - 6, **characterized in that** the cylinders (68) of the piston/cylinder arrangements (64) are mounted on a common system carrier (62).

8. The variator as claimed in one of the claims 1 - 6, **characterized in that** the pistons of the piston/cylinder arrangements are mounted on a common system carrier.

9. The variator as claimed in claim 7 or 8, **characterized in that** the cylinders (68) or the pistons are formed in one piece with the system carrier (62).

10. The variator as claimed in one of the claims 1 - 9, **characterized in that** the levers (72) are mounted pivotably on a common system carrier (62).

11. The variator as claimed in one of the claims 1 - 10, **characterized in that** the roller carriers (50) are connected to the associated lever (72) in each case via a cardan joint or a ball joint (76).

12. The variator as claimed in one of the claims 1 - 11, **characterized in that** a system carrier (62) as a variator component (26) fixed with respect to the housing is provided.

13. The variator as claimed in claim 12, **characterized in that** the system carrier (62, 95, 96) is multipart.

14. The variator as claimed in claim 12 or 13, **characterized in that** the system carrier (62) has at least one fluid duct (98).

15. The variator as claimed in claim 13 and 14, **characterized in that** the fluid duct (98) is formed in one system carrier part (96) by at least one groove, which is closed by another system carrier part (95).

16. The variator as claimed in one of the claims 12 - 15, **characterized in that** the system carrier (62) has a bearing point (94) for a variator shaft (22).

17. The variator as claimed in one of the claims 12 - 15, **characterized in that** the system carrier has a bearing point for a countershaft.

18. The variator as claimed in one of the claims 1 - 17, **characterized in that** the kinematics of the connection of the piston/cylinder arrangements (64) to the respective levers (72) are utilized to move the rollers (34) transversally in order to reduce the transfer ratio.

19. The variator as claimed in one of the claims 1 - 17, **characterized in that** the kinematics of the connection of the piston/cylinder arrangements (64) to the respective levers (72) are utilized to move the rollers (34) transversally in order to increase the transfer ratio.

20. A variator arrangement (20) comprising two or more variators (26) according to one of the claims 1- 19.

21. The variator arrangement as claimed in claim 20, **characterized in that** the two variators (26) each have a system carrier (62), said system carrier being connected to one another by means of a connecting element (100).

## Revendications

1. Variateur (26) pour une transmission toroïdale (10), avec un disque d'entraînement (28) et un disque de sortie (30), entre lesquels est ménagée une chambre toroïdale (32) qui définit un cercle de référence toroïdal (54), et au moins deux rouleaux (34) qui sont disposés dans la chambre toroïdale (32) pour la transmission de couple entre le disque d'entraînement (28) et le disque de sortie (30), les rouleaux (34) étant chacun montés à rotation sur un support de rouleau (50), les supports de rouleau (50) étant chacun déplaçables spatialement au moyen d'un dispositif à piston/cylindre (64) pour modifier la démultiplication du variateur (26), et les pistons (66) des dispositifs à piston/cylindre (64) étant chacun déplaçables le long d'un axe de levée (70), et les dispositifs à piston/cylindre (64) étant reliés aux supports de rouleau (50) par des leviers (72) respectifs,
**caractérisé en ce que**
les dispositifs à piston/cylindre (64) et les supports de rouleau (50) sont articulés sur les leviers (72) respectifs de façon que la force de réglage produite par les dispositifs à piston/cylindre (64) soit appliquée de manière amplifiée aux supports de rouleau (50) respectifs.

2. Variateur selon la revendication 1, **caractérisé en ce que** les leviers (72) sont montés à pivotement et solidaires du carter dans la transmission toroïdale (10).

3. Variateur selon la revendication 1 ou 2, **caractérisé en ce que** les axes de levée (70) des dispositifs à piston/cylindre (64) sont chacun orientés à peu près parallèlement à une tangente au cercle de référence toroïdal (54).

4. Variateur selon la revendication 3, **caractérisé en ce que** les dispositifs à piston/cylindre (64) sont disposés dans la région de la circonférence extérieure du disque d'entraînement, respectivement de sortie (28, 30).

5. Variateur selon la revendication 4, **caractérisé en ce que** les axes de levée (70) des dispositifs à piston/cylindre (64) sont disposés à peu près perpendiculairement à l'axe (22) du disque d'entraînement, respectivement de sortie (28, 30).

6. Variateur selon la revendication 4, **caractérisé en ce que** les axes de levée (70') des dispositifs à piston/cylindre (64') sont disposés à peu près parallèlement à l'axe (22) du disque d'entraînement, respectivement de sortie (28, 30).

7. Variateur selon une des revendications 1 à 6, **caractérisé en ce que** les cylindres (68) des dispositifs à piston/cylindre (64) sont montés sur un support de système (62) commun.

8. Variateur selon une des revendications 1 à 6, **caractérisé en ce que** les pistons des dispositifs à piston/cylindre sont montés sur un support de système commun.

9. Variateur selon la revendication 7 ou 8, **caractérisé en ce que** les cylindres (68) ou les pistons sont formés d'une seule pièce avec le support de système (62).

10. Variateur selon une des revendications 1 à 9, **caractérisé en ce que** les leviers (72) sont montés à pivotement sur un support de système commun (62).

11. Variateur selon une des revendications 1 à 10, **caractérisé en ce que** les supports de rouleaux (50) sont chacun reliés au levier (72) associé par une articulation à la Cardan ou à rotule (76).

12. Variateur selon une des revendications 1 à 11, **caractérisé en ce qu'**il est prévu un support de système (62) comme composant solidaire du carter du variateur (26).

13. Variateur selon la revendication 12, **caractérisé en ce que** le support de système (62, 95, 96) est en plusieurs parties.

14. Variateur selon la revendication 12 ou 13, **caractérisé en ce que** le support de système (62) présente au moins un canal de fluide (98).

15. Variateur selon les revendications 14 et 15, **caractérisé en ce que** le canal de fluide (98) est formé par au moins une rainure dans une partie de support de système (96) qui est fermée par une autre partie de support de système (95).

16. Variateur selon une des revendications 12 à 15, **caractérisé en ce que** le support de système (62) présente un point d'appui (94) pour un arbre de variateur (22).

17. Variateur selon une des revendications 12 à 15, **caractérisé en ce que** le support de système présente un point d'appui pour un arbre intermédiaire.

18. Variateur selon une des revendications 1 à 17, **caractérisé en ce que** la cinématique de la liaison des dispositifs à piston/cylindre (64) avec les leviers (72) respectifs est utilisée pour déplacer transversalement les rouleaux (34) afin de diminuer la démultiplication.

19. Variateur selon une des revendications 1 à 17, **caractérisé en ce que** la cinématique de la liaison des dispositifs à piston/cylindre (64) avec les leviers (72) respectifs est utilisée pour déplacer transversalement les rouleaux (34) afin d'augmenter la démultiplication.

20. Système de variateur (20) composé de deux ou plus variateurs (26) selon une des revendications 1 à 19.

21. Système de variateur selon la revendication 20, **caractérisé en ce que** les deux variateurs (26) présentent chacun un support de système (62) qui sont reliés ensemble par un élément de liaison (100).
